Europäisches Patentamt

European Patent Office

Office européen des brevets

(19)

(11) Veröffentlichungsnummer: **0 383 077**
**A2**

(12) **EUROPÄISCHE PATENTANMELDUNG**

(21) Anmeldenummer: 90101566.9

(22) Anmeldetag: 25.01.90

(51) Int. Cl.⁵: **B29C 67/22, B26D 3/28**

(30) Priorität: 16.02.89 DE 3904721

(43) Veröffentlichungstag der Anmeldung:
22.08.90 Patentblatt 90/34

(84) Benannte Vertragsstaaten:
**AT BE DE ES FR GB NL**

(71) Anmelder: **METZELER SCHAUM GMBH**
**Donaustrasse 51**
**D-8940 Memmingen(DE)**

(72) Erfinder: **Dell, Friedhelm**
**Fuchstal 7**
**3411 Katlenberg(DE)**
Erfinder: **Lieber, Erich**
**Postweg 3**
**3580 Fritzlar-Ungedanken(DE)**

(74) Vertreter: **Seibert, Rudolf, Dipl.-Ing. et al**
**Rechtsanwälte Seibert & Partner**
**Tattenbachstrasse 9**
**D-8000 München 22(DE)**

(54) Verfahren zur Herstellung von Schaumstoff-Langspaltbahnen.

(57) Bei einem Verfahren zur Herstellung von Schaumstoff-Langspaltbahnen, die aus einem Schaumstoffblock, dessen Stirnseiten miteinander verklebt werden, fortlaufend geschnitten werden, ist zur Vermeidung von fühlbaren Verhärtungen an den Klebenähten der einzelnen Langspaltbahnen erfindungsgemäß vorgesehen, daß der für die Langspaltfertigung zu verwendende Schaumstoffblock mit von der Vertikalen abweichenden Schnitten, z.B. schräg oder im ZICK-ZACK, aus der übrigen Blockbahn abgetrennt wird.

FIG. 2

EP 0 383 077 A2

## Verfahren zur Herstellung von Schaumstoff-Langspaltbahnen

Die Erfindung bezieht sich auf ein Verfahren zur Herstellung von Schaumstoff-Langspaltbahnen, die aus einem Schaumstoffblock, dessen Stirnseiten miteinander verklebt werden, fortlaufend geschnitten werden.

Bei der Herstellung dünner Bahnen oder Folien von wenigen Millimetern Dicke aus elastischem Weichschaumstoff wird im allgemeinen ein Schaustoffblock üblicher Größe, d.h. von etwa 2 m Breite, 1,30 m Höhe und 60 m Länge an den Stirnflächen des Schaumstoffblockes zu einem Ring verklebt, die geschlossene Schleife dann über zwei rotierend angetriebene Wellen aufgespannt und mit einem sich quer zum Block erstreckenden Messer von dem umlaufenden Block fortlaufend eine dünne Bahn der vorgegebenen Stärke abgetrennt und diese Bahn aufgerollt.

Der Schaumstoffblock wird üblicherweise mit vertikalen Schnitten vom übrigen Schaumstoff abgetrennt, so daß sich beim Zusammenkleben der Stirnflächen eine Klebenaht ergibt, die senkrecht zur Blocklängsrichtung und dann auch bei der Langspaltware senkrecht zur Längsrichtung der dünnen Schaumstoffbahn liegt. Da diese Klebestellen relativ hart sind, sind diese dann auch im Laufe der Schaumstoffbahn oder -folie wegen des Härteunterschiedes zum übrigen Schaumstoff sehr leicht fühlbar, so daß bei der Weiterverarbeitung ggfs. diese Klebestelle herausgeschnitten werden muß, was ggf. zu größeren Abfallstücken führen kann, wenn diese Klebestelle ungünstig liegt.

Der vorliegenden Erfindung liegt daher die Aufgabe zugrunde, ein Verfahren anzugeben, mit dem sich derartige Klebestellen erheblich weniger bemerkbar machen, so daß eine Beeinträchtigung der Verarbeitbarkeit der Schaumstoffbahnen praktisch nicht mehr auftritt.

Zur Lösung dieser Aufgabe ist erfindungsgemäß vorgesehen, daß der für die Langspaltfertigung zu verwendende Schaumstoffblock mit von der Vertikalen abweichenden Schnitten aus der üblichen Blockbahn abgetrennt wird.

Durch die damit erreichbaren Stirnflächen, die jetzt nicht mehr im rechten Winkel zum Schaumstoffblock, sondern vielmehr schräg dazu geneigt sind, ergibt sich auch eine von der Senkrechten abweichende Klebenaht, so daß beim Zusammendrücken der Langspalt-Schaumbahnen diese schrägverlaufende Klebenaht noch weiter weggekippt wird, so daß sich ein Härteunterschied praktisch nicht mehr bemerkbar macht.

Besonders zweckmäßig ist es dabei, wenn der Schaumstoffblock an seinen Enden unter einem Winkel von etwa 30 bis 50° zur Horizontalen mit einem glatten durchgehenden Schnitt abgetrennt wird.

Es ist aber auch möglich, die Stirnseiten mit einem ZICK-ZACK-Schnitt identischer Konfiguration an beiden Blockenden zu schneiden. Auch damit ergibt sich bei der fertigen Langspaltware jeweils eine schräg zur Horizontalen verlaufende Klebenaht.

Schließlich ist es auch möglich, die Stirnflächen des Schaumstoffblocks mit einem Pyramidenschnitt zu versehen, um auch hierbei schrägverlaufende Klebenähte zu erhalten.

Anhand einer schematischen Zeichnung wird das Verfahren zur Herstellung derartiger Schaumstoff-Langspaltbahnen mit schräger Klebenaht näher erläutert. Dabei zeigen:

Fig. 1 eine Seitenansicht eines durchgetrennten Schaumstoffblocks mit dem entsprechend schräggestellten Messer,

Fig. 2 einen an den Stirnseiten verklebten und zum Abschälen aufgespannten Schaumstoffblock und

Fig. 3 einen Schaumstoffblock mit zick-zackförmigen Stirnflächen.

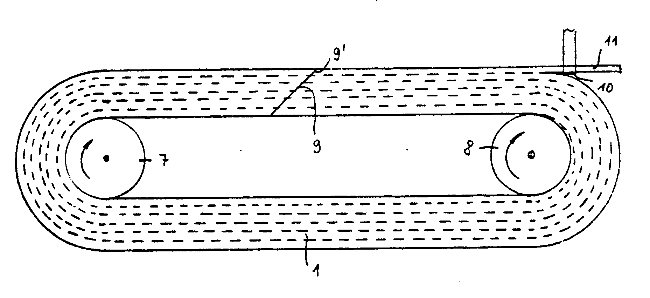

Wie aus Fig. 1 zu ersehen ist, läuft auf einem Gestell 2 mit rotierenden Walzen 3 ein Schaumstoffblock 1, wie er direkt aus der nicht dargestellten Schäummaschine kommt. Dieser Schaumstoffblock 1 hat einen herkömmlichen Querschnitt von etwa 2 m Breite und 1,20 m Höhe. Oberhalb des Schaumstoffblocks 1 ist an einem Gerüst 4 schwenkbar beispielsweise ein gesondert angetriebener Blocktrenner 5 in Form eines umlaufenden Messers 6 und eines Messerbalkens angeordnet, der jeweils nach Erreichen der vorgesehenen Blocklänge - im allgemeinen nach 60 Metern - auf den vorbeilaufenden Schaumstoffblock 1 zugeschwenkt wird und diesen durchtrennt.

Dieser Blocktrenner 5 ist bei den dargestellten Ausführungsbeispielen unter einem Winkel von 45° zur Horizontalen angeordnet. Wie aus der Zeichnung anhand der gestrichelten Linien erkennbar ist, kann dieser Blocktrenner aber auch in flacheren Winkeln von etwa 40°, 35° oder 30° angeordnet sein. Durch diese Schrägstellung ergeben sich dann unter dem gleichen Winkel geschnittene und damit schräg zur Horizontalen verlaufende Stirnflächen des abgetrennten Schaumstoffblocks.

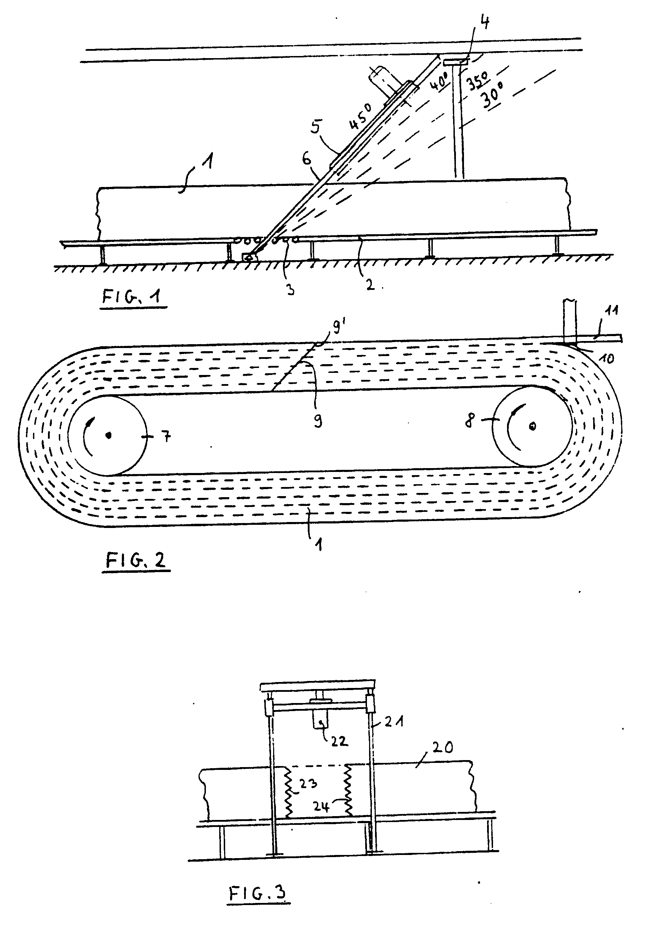

In Fig. 2 ist ein zum Abschälen der Langspaltbahnen vorbereiteter und aufgespannter Schaumstoffblock schematisch dargestellt. Dabei wird der Schaumstoffblock 1 um zwei rotierend angetriebene Walzen 7 und 8 zu einer geschlossenen Schleife gelegt und an seinen Stirnflächen so miteinander verklebt, daß sich aufgrund des in Fig. 1 dargestellten schrägen Schnittes auch eine entsprechend schrägverlaufende Klebenaht 9 ergibt.

Der somit in einer geschlossenen Schleife gelegte Schaumstoffblock 1 läuft dann über die rotierend angetriebenen Wellen 7 und 8 auf einer entsprechenden Schleifenbahn um, wobei über ein nur schematisch angedeutetes Messer 10 eine Schaumstoffbahn 11 eingestellter Dicke vom umlaufenden Schaumstoffblock 1 abgeschält und an einer nicht dargestellten Haspel aufgewickelt wird.

Durch die im Winkel von zweckmäßigerweise 30° bis 50° verlaufende Klebenaht 9 verlaufen dann auch die einzelnen Klebenähte 9' in der abgetrennten Schaumstoffbahn 11 schräg zur Horizontalen und damit auch schräg zur üblichen Belastungsrichtung. Beim Zusammendrücken einer Schaumstoffbahn 11 im Bereich dieser Klebenaht 9' wird dann diese Klebenaht weggedrückt und praktisch flachgelegt, so daß sie praktisch nicht mehr fühlbar ist.

Da aber bei einem glatten Schrägschnitt, wie er in Fig. 1 und 2 dargestellt ist, sich die Blocklänge von den üblichen 60 Meter je nach schräger Anstellung des Schnittes um 1,5 bis 2 m verlängert, können sich Probleme bei der meist erforderlichen Zwischenlagerung ergeben. Aus diesem Grunde kann ein schräger Schnittverlauf erforderlich sein, bei dem sich die Blocklänge nur unwesentlich verlängert. Eine derartige Möglichkeit ist in Fig. 3 gezeigt. Dabei wird der Block 20 vom in einer Schneidvorrichtung 21 geführten Schneiddraht oder Schneidmesser 22 in vertikaler Richtung, jedoch zick-zack-förmig durchgetrennt, so daß sich die beiden zick-zack-förmigen Stirnflächen 23 und 24 ergeben. Bei einem derartigen zick-zack-förmigen Schnitt ist jedoch darauf zu achten, daß die Konturen genau ineinander passen, damit beim anschließenden Verkleben der Stirnflächen keine Stufe an den möglicherweise versetzten Blockenden auftritt.

Wenn nun ein derartiger, mit zick-zack-förmigen Sirnflächen 23 und 24 versehener und zusammengeklebter Block auf einer Langspaltanlage entsprechend Fig. 2 in dünne Bahnen zerschnitten wird, wird die jeweilige Klebenaht in der einzelnen Bahn ebenfalls wieder glattschräg verlaufen, wie das bei einer Gestaltung nach Fig. 2 der Fall ist.

Mit einer derartigen Stirnflächengestaltung ist also auch bei einem in der Resultierenden vertikalen Schnitt ein schräger Verlauf der einzelnen Klebenähte in der abgespaltenen Schaumstoffbahn zu erreichen.

Schließlich ist es auch möglich die Stirnflächen des Schaumstoffblockes - was jedoch in der Zeichnung nicht näher dargestellt ist -mit einem pyramidenförmigen Konturschnitt zu versehen, in dem die Stirnflächen zunächst glatt vertikal durchgeschnitten, auf die Stirnflächen eine entsprechende, mit pyramidenförmigen Höckern versehene Platte aufgepreßt und der Block unmittelbar hinter den Spitzen der Höcker nochmals durchgetrennt wird, so daß sich dann eine höckerförmige Oberfläche ergibt. Damit verläuft dann die Klebenaht in der abgespaltenen Schaumstoffbahn nicht nur im Winkel schräg zur Oberfläche, sondern in Aufsicht auch noch zick-zack-förmig, um damit die durch die Klebenaht bedingten Härtebereiche noch weiter zu verteilen und damit noch weniger fühlbar zu machen.

Mit dem beschriebenen Verfahren ist es also auf einfache Weise möglich, Klebenähte in dünnen Schaumstoffbahnen so zu gestalten, daß ein Härteunterschied von außen praktisch nicht mehr fühlbar ist.

Zusätzlich ergibt sich durch die Schrägstellung der Klebenaht noch eine größere Kontaktfläche zwischen den beiden aneinanderstoßenden Schaumstoffbahnen, so daß damit auch die Festigkeit der Verbindungsstelle erhöht wird.

**Ansprüche**

1. Verfahren zur Herstellung von Schaumstoff-Langspaltbahnen, die aus einem Schaumstoffblock, dessen Stirnseiten miteinander verklebt werden, fortlaufend geschnitten werden, dadurch gekennzeichnet, daß der für die Langspaltfertigung zu verwendende Schaumstoffblock mit von der Vertikalen abweichenden Schnitten aus der üblichen Blockbahn abgetrennt wird.

2. Verfahren nach Anspruch 1, dadurch gekennzeichnet, daß der Schaumstoffblock an seinen Enden unter einem Winkel von etwa 30 bis 50° zur Horizontalen mit einem glatten, durchgehenden Schnitt abgetrennt wird.

3. Verfahren nach Anspruch 1, dadurch gekennzeichnet, daß die Stirnseiten mit einem ZICK-ZACK-Schnitt identischer Konfiguration an den beiden Blockenden geschnitten werden.

4. Verfahren nach Anspruch 1, dadurch gekennzeichnet, daß die Stirnflächen des Schaumstoffblocks mit einem Pyramidenschnitt versehen werden.

FIG. 1

FIG. 2

FIG. 3